# EUROPÄISCHE PATENTSCHRIFT

(11) **EP 1 561 500 B1**
(45) Veröffentlichungstag und Bekanntmachung des Hinweises auf die Patenterteilung: **18.11.2009**
(21) Anmeldenummer: 04002728.6
(22) Anmeldetag: 06.02.2004
(51) Int. Cl.: B01D 19/00

(54) **Vorrichtung zum Versprühen von Wasser und katalytischer Umsetzung von darin enthaltenen Gasen**
Device for spraying water and catalytic conversion of gas contained therein
Dispositif de pulvérisation d'eau et de conversion catalytique des gaz contenus

(43) Veröffentlichungstag der Anmeldung: 10.08.2005
(73) Patentinhaber: Balcke-Dürr GmbH, 46049 Oberhausen (DE)
(72) Erfinder: Grobelny, Günter, 44627 Herne (DE); Keck, Robert-Joachim, 89568 Hermaringen (DE)
(74) Vertreter: Lang, Friedrich

(56) Entgegenhaltungen:
- DE-A- 4 230 054
- DE-A- 19 822 203
- GB-A- 1 258 998
- US-A- 2 671 524
- US-B2- 6 527 942

## Beschreibung

Die Erfindung betrifft eine Vorrichtung und ein Verfahren zum Entgasen von Wasser in einem Speisewasserbehälter eines Wärmekraftwerks gemäß dem Oberbegriff der Ansprüche 1 und 2. Eine derartige Vorrichtung und ein entsprechendes Verfahren ist aus GB 1258998 bekannt.

Es ist bekannt, dass Wärmekraftwerke einen Wasser-Dampf-Kreislauf (Wärmekreislauf) aufweisen, in dem unter anderem ein Speisewasserbehälter angeordnet ist. Der Speisewasserbehälter dient der Bevorratung und Aufarbeitung des im Wärmekreislauf zirkulierenden Wassers. Bei der Aufarbeitung ist in vor allem die Entgasung des Wassers von Bedeutung.

Bei allen Wärmekraftwerken ist eine möglichst vollständige Entgasung des Speisewassers zum zuverlässigen und sicheren Betrieb sowie zur Erreichung eines möglichst großen Wirkungsgrades der Anlage unerläßlich. Als zu entfernende Gase sind vor allem die bei den im Speisewasserbehälter herschenden Temperaturen nicht kondensierbaren Gase, wie z. B. Sauerstoff und Kohlendioxid, zu nennen. Weiterhin entstehen speziell in einem Kernkraftwerk vom Typ eines Siedewasserreaktors durch die Einwirkung der radioaktiven Strahlung auf das durch den Reaktordruckbehälter zirkulierende Speisewasser Wasserstoff- und Sauerstoffgas, das auch als Photolysegas bezeichnet wird.

Durch die oxidierenden Eigenschaften des Sauerstoffs kommt es bei den gesamten Komponenten des Wärmekreislauf zu Korrosion und damit zu Schäden, die die Lebensdauer der Komponenten drastisch herabsetzten. Andererseits stellt das durch die Photolyse entstandene Wasserstoffgas ein enormes Sicherheitsrisiko dar, da es selbst hochentzündlich ist und insbesondere mit dem ebenfalls vorhandenen Sauerstoffgas eine hochexplosive Mischung, das sogenannte Knallgas, bildet. Um dennoch einen sicheren Betrieb des Siedewasserreaktors zu gewährleisten, muss das entstandene Photolysegas möglichst vollständig aus dem Speisewasser entfernt werden.

Eine Möglichkeit zur Entfernung von Wasserstoff und Sauerstoff aus dem in einem Primärkreis eines Kernkraftwerkes enthaltenen Wassers stellt die Umsetzung der beiden Gase mittels katalytisch aktiver Oberflächen gemäß der Offenlegungsschrift DE 3614267 A1 dar.

Bei einem anderen Verfahren, der sogenannten Sprühentgasung, wird das die Gase enthaltende Wasser oberhalb des sich im Speisewasserbehälter befindlichen Speisewassers in Form feinster Wassertröpfchen versprüht und mit heißem Wasserdampf, dem sogenannten Anzapfdampf, in Kontakt gebracht. Durch den Wärmeaustausch des Anzapfdampfes mit dem versprühten kälteren Wasser wird das darin gelöste Gas freigesetzt und durch eine geeignete Absaugvorrichtung aus dem Wärmekreislauf entfernt. Zum Versprühen des Wassers im Speisewasserbehälter kann beispielsweise das aus der DE 10001297 A1 bekannte federbelastete Flüssigkeitsverteilventil eingesetzt werden.

Allerdings ist die Absaugung der durch die Sprühentgasung freigesetzten Gase mit einigen grundsätzlichen Problemen verbunden. So hat sich in der Praxis gezeigt, dass der durch die Versprühung des Wassers gebildete Sprühschirm einen verhältnismäßig dichten Mantel bildet, der das Absaugen der Gase durch die im Speisewasserbehälter angeordnete Absaugvorrichtung im Leistungsbetrieb erheblich beeinträchtigt. Eine unzureichende Absaugung der Radiolysegase führt aber zu den eingangs beschriebenen Nachteilen und Gefahren beim Betrieb des Wärmekreislaufs.

Auch wird die gleichmäßige Verteilung des zu entgasenden Wassers durch die Sprühvorrichtung und die gleichmäßige Verteilung des Anzapfdampfes im Speisewasserbehälter durch die unvollständige Absaugung der Radiolysegase erheblich erschwert. Dadurch kann der optimale Wirkungsgrad der Sprühentgasung und letztlich des gesamten Wärmekreislaufs nicht erreicht werden.

Der Erfindung liegt deshalb die Aufgabe zugrunde, eine Vorrichtung der eingangs genannten Art anzugeben, mit welcher die bei der Sprühentgasung aus dem Wasser freigesetzten Gase möglichst einfach, zuverlässig und vollständig entfernt werden und ein hoher Wirkungsgrad des Wärmekreislaufs erreicht wird.

Diese Aufgabe wird für die Vorrichtung zum Entgasen von Wasser in einem Speisewasserbehälter eines Wärmekraftwerks gemäß Anspruch 1 und durch das Verfahren nach Anspruch 2 gelöst.

Als Katalysator wird im Weiteren jeder Körper verstanden, der geeignet ist, die im Wasser enthaltenen Gase, insbesondere die bei den üblicherweise im Kreislauf herrschenden Temperaturen nicht kondensierbaren Gase, durch eine chemische Reaktion umzusetzen. Dabei sollen die Gase nach Möglichkeit in Wasser oder eine gut wasserlösliche Verbindung überführt werden. Da der Katalysator und die zu entfernenden Gase in verschiedenen Phasen vorliegen, handelt es sich bei der Umsetzung um eine sogenannte heterogene Katalyse.

Vorteilhafterweise wird durch die erfindungsgemäße Sprühvorrichtung das im Speisewasser enthaltene Gas besonders einfach durch Umsetzung entfernt. Durch die Beseitigung der Gase aus dem Wärmekreislauf wird die Lebensdauer der darin angeordneten Komponenten deutlich erhöht, da eine Korrosion, beispielsweise durch Sauerstoffgas, nicht mehr möglich ist. Dadurch vergrößert sich auch das Wartungsintervall für den Wasser-Dampf-Kreislauf, was Kostenvorteile mit sich bringt. Auch ergibt sich durch die vollständige Entfernung der korrosiven Gase eine höhere Betriebssicherheit des Wärmekraftwerks.

Weiterhin kann durch die Erfindung die Entfernung der Gase gegenüber der bekannten Technik mit jeweils separater Vorrichtung für die Versprühung des Wassers und die Absaugung der freigesetzten Gase erheblich verbessert werden. Letzteres ist darauf zurückzuführen, dass das aus dem versprühten Wasser freigesetzte Gas nahe seines Bildungsortes durch den Katalysator umgesetzt wird ohne, wie bei den bekannten zweiteiligen Vorrichtungen, eine größere Strecke zur Absaugvorrichtung zurücklegen zu müssen. Durch die gegenüber dem Stand der Technik verbesserte Entfernung der Gase werden Leistungsverluste im Wärmekreislauf vermindert und damit letztlich der Wirkungsgrad des Kraftwerkes erhöht.

In diesem Zusammenhang sind als weiterer Vorteil die gegenüber dem Stand der Technik geringeren Kosten zu nennen, da zur erfindungsgemäßen Entfernung der Gase nur eine Vorrichtung benötigt wird, während die bekannte Technik jeweils eine separate Vorrichtung für Versprühung des Wassers und Absaugung der Gase vorsieht.

Vorteilhafterweise wird durch die Erfindung auch eine gleichmäßige Verteilung des zu entgasenden Wassers und des Anzapfdampfes im Speisewasserbehälter ermöglicht, was zu einem verbesserten Wirkungsgrad der Sprühentgasung und somit des Wärmekreislaufs führt. Auch kann die erfindungsgemäße Vorrichtung ohne die Gefahr einer Überlastung betrieben werden, wodurch diese seltener als herkömmliche Sprühvorrichtungen repariert werden muss. Mit der Wartung einhergehende Stillstandszeiten des Kraftwerks werden so reduziert und Kosten eingespart.

Schließlich ist als Vorteil zu erwähnen, dass auch bestehende Sprühvorrichtungen mit verhältnismäßig geringem Aufwand mit einem Katalysator nachgerüstet werden können. Dadurch können die Vorteile der Erfindung kostengünstig auch für bereits bestehende Anlagen erreicht werden.

In einer ersten bevorzugten Ausführungsform ist vorgesehen, dass der Katalysator ausgebildet ist, um Wasserstoff- und Sauerstoffgas zu Wasser umzusetzen. Eine solche Ausbildung des Katalysators ist besonders dann von großem Vorteil, wenn das Speisewasser in einem Kernkraftwerk vom Typ eines Siedewasserreaktors zirkuliert. Das durch die Einwirkung der radioaktiven Strahlung auf das Wasser gebildete Gemisch aus Wasserstoff- und Sauerstoffgas wird dann mittels des in der Sprühvorrichtung angeordneten Katalysators gefahrlos zu Wasser umgesetzt. Auf diese Weise wird sowohl das hochentzündliche Wasserstoffgas als auch das hochexplosive Knallgasgemisch dem Wärmekreislauf entzogen und somit die Betriebssicherheit des Kraftwerks erhöht. Für die Umsetzung der Photolysegase zu Wasser sind als Katalysator zahlreiche Metalle und metallorganische Verbindungen bekannt.

Besonders zweckmäßig ist deshalb, wenn der Katalysator wenigstens ein Edelmetall umfasst. Grundsätzlich können alle aus dem Stand der Technik zur Umsetzung von Gasen bekannten Edelmetalle Verwendung finden. Besonders bevorzugt sind aber Metalle der 8. Nebengruppe des Periodensystems der Elemente (Ni, Pd, Pt), insbesondere Platin, da diese zahlreiche Gase katalytisch umzusetzen vermögen und auch für die katalytische Verbrennung von Wasserstoff- und Sauerstoffgas zu Wasser hervorragend geeignet sind. Neben einem einzigen Edelmetalle können aber auch mehrere Edelmetalle, beispielsweise Nickel und Platin, im Katalysator zugegen sein. Dabei können die Edelmetalle sowohl nebeneinander als auch in Form einer Legierung im Katalysator vorliegen.

In einer weiteren bevorzugten Ausführungsform ist vorgesehen, dass der Katalysator als Massivmaterial ausgebildet ist. Ein solcher Katalysator kann einfach gefertigt werden und ist aufgrund seiner Robustheit durch eine große Lebensdauer gekennzeichnet. Die Umsetzung der im Wasser enthaltenen Gase kann so zuverlässig über einen längeren Zeitraum erfolgen.

Es kann aber auch zweckmäßig sein, wenn der Katalysator als Trägerwerkstoff mit katalytisch aktiver Beschichtung ausgebildet ist. Eine solche Ausführung hat den Vorteil, dass nur die Beschichtung aus einem katalytisch aktiven Material, z. B. einem Edelmetall, bestehen muss, während der Trägerwerkstoff aus einem erheblich günstigeren Material gefertigt sein kann. Als Trägerwerkstoff können aus dem Stand der Technik bekannten Materialien, wie Metalloxide, insbesondere γ-Al₂O₃, Metalllegierungen, Keramiken und hochschmelzende Kunststoffe eingesetzt werden. Auf diese Art lässt sich ein kostengünstiger Katalysator herstellen, der dennoch eine zuverlässige Entfernung der im Wasser enthaltenen Gase gewährleistet.

Vorteilhaft kann es darüber hinaus sein, wenn der Katalysator eine Blechstruktur aufweist. Unter Blech wird im Folgenden ein Körper verstanden, dessen Dicke sehr klein zur Flächenabmessung ist. Das Blech kann als katalytisch aktives Massivmaterial oder als Trägerwerkstoff für eine katalytisch aktive Beschichtung ausgebildet sein. Für die Struktur des Blechs sind grundsätzlich alle aus dem Stand der Technik bekannten Strukturen denkbar. So kann diese eine regelmäßige oder unregelmäßige Abfolge von Erhebungen und Vertiefungen sein, zum Beispiel in der Form eines Wellen- oder Zackenmusters. Auch eine verhältnismäßig raue Oberfläche, beispielsweise eine dendritische Beschichtung, ist zur Bereitstellung einer großen aktiven Oberfläche denkbar. Darüber hinaus kann die Blechstruktur einen mehrlagigen Körper bilden, wodurch die katalytisch aktive Oberfläche weiter vergrößert wird.

Besonders zweckmäßig kann es weiterhin sein, wenn der Katalysator als Streckmetall ausgebildet ist. Unter einem Streckmetall wird im Weiteren ein metallischer Körper verstanden, dem in an sich bekannter Weise durch einen Streckvorgang eine Struktur aufgeprägt wird. Ein solcher Katalysator kann bei geringem Materialverbrauch verhältnismäßig einfach hergestellt werden und gewährleistet aufgrund seiner großen katalytisch aktiven Oberfläche dennoch zuverlässig die Entfernung der im Wasser enthaltenen Gase.

Weiterhin ist in einer bevorzugten Ausführungsform vorgesehen, dass der Katalysator als Drahtnetz ausgebildet ist. Dabei können an sich bekannte Drahtnetze verwendet werden, bei denen die einzelnen Drähte als Massivmaterial oder als Trägerwerkstoffs mit katalytisch aktiver Beschichtung ausgebildet sind. Auch die mehrlagige Anordnung eines Drahnetzes zu einem Drahtgewebe ist grundsätzlich denkbar. In jedem Fall können die Vorteile der Erfindung durch die relativ große Oberfläche zuverlässig erzielt werden.

Auch ist in einer bevorzugten Ausführungsform vorgesehen, dass der Katalysator als wenigstens ein modulares Element ausgebildet ist. Das wenigstens eine Elemente kann mit geringem Aufwand ausgetauscht werden, beispielsweise wenn dies aufgrund von Verschmutzung oder Erschöpfung der aktiven Oberfläche erforderlich ist. Weiterhin bietet die Verwendung mehrerer Elemente den Vorteil, dass die katalytisch aktive Oberfläche auf einfache Weise durch die Anzahl der in einer Sprühvorrichtung angeordneten Elemente festgelegt werden kann. Das wenigstens eine modulare Element kann in jeder der oben beschriebenen Formen als Katalysator ausgebildet sein.

Eine bevorzugte Ausführungsform sieht vor, dass die Sprühvorrichtung wenigstens einen Verteilbereich mit Sprühöffnungen umfasst und der Katalysator in unmittelbarer Nähe des wenigstens einen Verteilbereichs angeordnet ist. Unter Verteilbereich wird im Weiteren derjenige Bereich der Sprühvorrichtung verstanden, mittels dessen das Versprühen des zu entgasenden Wassers erfolgt. Dazu ist eine Vielzahl von im Verteilbereich angeordneten Sprühöffnungen vorgesehen. Eine erfindungsgemäße Sprühvorrichtung weist einen oder auch mehrere solche Verteilbereiche auf.

Dadurch, dass der Katalysator in unmittelbarer Nähe des wenigstens einen Verteilbereichs angeordnet ist, kann das aus dem versprühten Wasser freigesetzte Gas nahe seines Bildungsortes umgesetzt und aus dem Wärmekreislauf entfernt werden. Unter unmittelbarer Nähe ist dabei eine Anordnung zu verstehen, bei der der Katalysator unter Einhaltung des für den Verteilbereich notwendigen Bauraums so nah wie möglich an diesem angeordnet ist. Je näher sich der Katalysator am Verteilbereich befindet, desto vollständiger und rascher können die aus dem Wasser freigesetzten Gase entfernt werden. Darüber hinaus ergibt sich durch die unmittelbare Anordnung am Verteilbereich vorteilhafterweise auch ein verhältnismäßig kleiner Bauraum für die erfindungsgemäße Sprühvorrichtung.

Besonders zweckmäßig ist es dabei, wenn der Katalysator in einer Längsrichtung der Sprühvorrichtung oberhalb des wenigstens einen Verteilbereichs angeordnet ist. Durch eine solche Anordnung gelingt die Entfernung der Gase besonders gut und zuverlässig, da diese nach der Freisetzung aus dem versprühten Wasser aufgrund ihrer geringen Dichte bezüglich der Längsrichtung der Sprühvorrichtung nach oben strömen und dort am Katalysator umgesetzt werden. Dabei spielt auch die Tendenz der Gase eine Rolle, sich an kalten Stellen im Speisewasserbehälter aufzukonzentrieren. Da sich der Katalysator bei einer Anordnung oberhalb des wenigstens einen Verteilbereichs aufgrund des in Längsrichtung der Sprühvorrichtung von unten zum versprühten Wasser strömenden Anzapfdampfes in einer lokalen Unterkühlungszone befindet, konzentrieren sich die zu entfernenden Gase gerade im Bereich des Katalysators auf und können zuverlässig entfernt werden.

Besonders vorteilhaft ist es darüber hinaus, wenn der Katalysator an einer nach außen gerichteten Seite der Sprühvorrichtung angeordnet ist. Dadurch können die zu entfernenden Gase besonders gut zum Katalysator gelangen und dort schnell umgesetzt werden. Wenngleich jede nach außen gerichtete Seite der Sprühvorrichtung zur Umsetzung der Gase geeignet ist, wird eine nach außen gerichtete Seite, die zugleich oberhalb des wenigstens einen Verteilbereichs liegt, aus den oben aufgeführten Gründen besonders bevorzugt.

In einer weiteren vorteilhaften Ausführungsform ist vorgesehen, dass der Katalysator in einer Sprühvorrichtung mit wenigstens zwei Verteilbereichen anstelle eines Verteilbereichs angeordnet ist. Dadurch kann eine Sprühvorrichtung mit wenigstens zwei Verteilbereichen besonders einfach gemäß der Erfindung ausgebildet werden. Dazu wird in dem Bauraum, der für einen der wenigstens zwei Verteilbereiche vorgesehenen ist, anstelle des Verteilbereichs der Katalysator angeordnet. Dieser ist entsprechend dem vorgegebenen Bauraum so ausgebildet, dass er problemlos Platz findet. Auch der nachträgliche Umbau einer bestehenden Sprühvorrichtung mit wenigstens zwei Verteilbereichen zu einer erfindungsgemäßen Vorrichtung wird so auf besonders zweckmäßige Weise ermöglicht. Umgekehrt kann eine erfindungsgemäße Vorrichtung grundsätzlich aber auch wieder zu einer Sprühvorrichtung ohne Katalysator umgebaut werden.

Besonders zweckmäßig ist es darüber hinaus, wenn die Sprühvorrichtung eine Zylindersymmetrie besitzt. Die einzelnen Komponenten einer zylindersymmetrischen Vorrichtung können besonders einfach gefertigt werden wodurch die Herstellungskosten gering sind. Des Weiteren ist eine Sprühvorrichtung mit Zylindersymmetrie auch mit der zur Anordnung einer Sprühvorrichtung im Speisewasserbehälter in der Regel vorgesehenen Haltevorrichtung, wie z. B. einem Anschlussflansch, kompatibel. Dadurch ergibt sich vorteilhafterweise sowohl für neue als auch für bereits bestehende Anlagen eine Verwendungsmöglichkeit für diese bevorzugte Ausführungsform der Erfindung.

Weiterhin weist eine erfindungsgemäße Sprühvorrichtung mit Zylindersymmetrie das für einen Zylinder charakteristische günstige Verhältnis von Oberfläche zu Volumen auf. Demzufolge ist auch bevorzugt, dass der Katalysator im Bereich des Zylindermantels angeordnet ist. Dadurch kann im Verhältnis zum gesamten Bauraum der Sprühvorrichtung eine relativ große nach außen gerichtete Katalysatoroberfläche bereitgestellt werden. Im Übrigen werden durch eine Anordnung im Bereich des Zylindermantels auch Katalysatoroberflächen maximiert, die nicht nach außen gerichtet sind. Durch entsprechende bauliche Maßnahmen, beispielsweise dadurch, dass der Katalysator Ausnehmungen aufweist oder aber modulare Elemente mit Zwischenräumen vorgesehen sind, können auch diese Katalysatoroberflächen für das zu entfernende Gas zugänglich gemacht werden. Dadurch gelingt eine zuverlässige und noch schneller Umsetzung der Gase.

In einer weiteren bevorzugten Ausführungsform ist vorgesehen, dass in einer radialen Richtung zwischen einer Zylinderachse und dem Katalysator ein sich in axialer Richtung erstreckendes Rohr angeordnet ist, das ausgebildet ist, um dem wenigstens einen Verteilbereich Wasser zuzuführen. Die Anordnung des Rohres in der Vorrichtung trägt dem Umstand Rechnung, dass in einer erfindungsgemäßen Sprühvorrichtung wenigstens ein Verteilbereich mit zu entgasendem Wasser versorgt werden muss. Darüber hinaus ist die Anordnung zwischen Zylinderachse und Katalysator insbesondere dann vorteilhaft, wenn der Katalysator anstelle eines Verteilbereichs im Bereich des Zylindermantels angeordnet ist und der zwischen Zylinderachse und -mantel vorhandene Bauraum so besonders Platz sparend für das Rohr verwendet wird.

Gleichzeitig bildet das Rohr durch das hindurchströmende, verhältnismäßig kalte Wasser, eine lokale Unterkühlungszone der Sprühvorrichtung, deren Wirkung oben erläutert ist und dadurch verstärkt werden kann, dass die Anordnung des Rohres und des Katalysators oberhalb des wenigstens einen Verteilbereichs erfolgt. Wenngleich ein Rohr aufgrund des für das hindurchfließende Wasser geringen Strömungswiderstandes und der leichten Herstellung besonders bevorzugt ist, kann grundsätzlich auch ein Hohlkörper mit einem anderen Querschnitt zur Durchleitung des Wassers eingesetzt werden.

Schließlich ist in einer bevorzugten Ausführungsform vorgesehen, dass der Katalysator unmittelbar unterhalb einer oberen Wand des Speisewasserbehälters im Speisewasserbehälter angeordnet ist. Eine solche Anordnung trägt dem Umstand Rechnung, dass sich unterhalb einer oberen Wand der kälteste Bereich innerhalb des Speisewasserbehälters befindet. Besonders einfach lässt sich eine solche Anordnung dadurch realisieren, dass der Katalysator in der Sprühvorrichtung oberhalb des wenigstens einen Verteilbereichs angeordnet und die Sprühvorrichtung mit dem den Katalysator enthaltenden Bereich unmittelbar unterhalb der oberen Wand des Speisewasserbehälters angeordnet wird. An der so ausgebildeten Unterkühlungszone innerhalb des Speisewasserbehälters konzentrieren sich die umzusetzenden Gase auf, wodurch diese besonders gut und rasch mit dem dort befindlichen Katalysator aus dem Wärmekreislauf entfernt werden.

Nachfolgend wird die Erfindung anhand einer Zeichnung weiter erläutert. Es zeigen schematisch:
- Fig. 1: Einen Längsschnitt durch ein bevorzugtes Ausführungsbeispiel einer erfindungsgemäßen Sprühvorrichtung;
- Fig. 2: einen Querschnitt entlang der Linie AA durch das bevorzugte Ausführungsbeispiel gemäß Fig. 1; und
- Fig. 3: einen Querschnitt entlang der Linie BB durch ein bevorzugtes Ausführungsbeispiel gemäß Fig. 1.

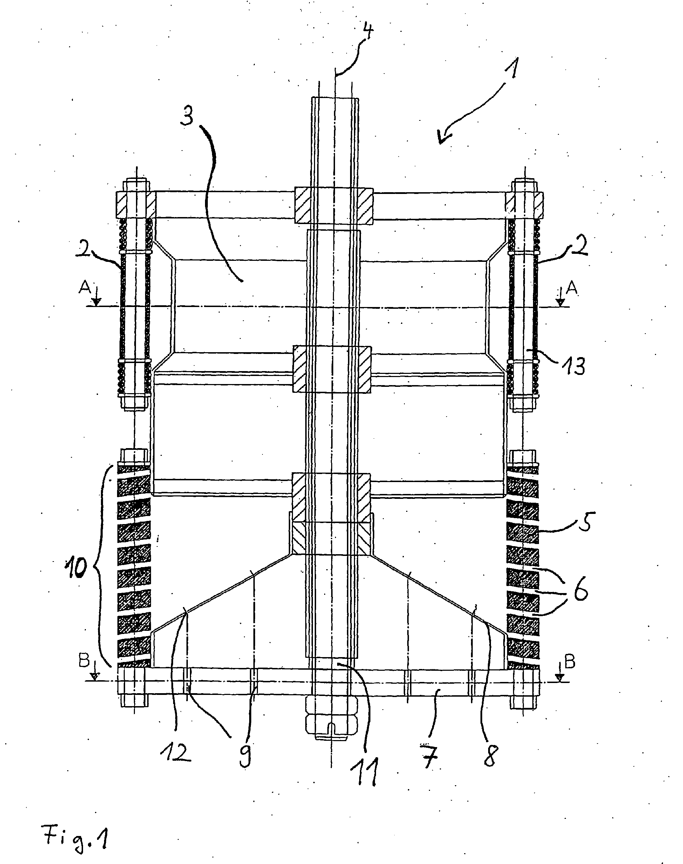

Fig. 1 zeigt eine Sprühvorrichtung 1 mit der zu entgasendes Wasser in einem Speisewasserbehälter eines Wärmekraftwerks versprüht und mit der das aus dem Wasser ausgetretene Gas durch einen Katalysator umgesetzt wird. Im nicht abgebildeten Speisewasserbehälter ist die Sprühvorrichtung 1 gemäß Fig. 1 orientiert, d. h., das Wasser wird durch einen im unteren Bereich der Sprühvorrichtung 1 angeordneten Verteilbereich 10 versprüht, während die Umsetzung der Gase an dem in einem oberen Bereich der Sprühvorrichtung 1 angeordneten Katalysator stattfindet.

Die Sprühvorrichtung 1 weist eine Zylindersymmetrie auf, wobei die Axialrichtung (Längsrichtung) durch eine Achse 4 definiert wird. Zum Versprühen des zu entgasenden Wassers ist der Verteilbereich 10 vorgesehen, der eine im Mantelbereich der Sprühvorrichtung 1 angeordnete Sprühfeder 5 mit Federschlitzen 6 als Sprühöffnungen aufweist.

Zur Umsetzung des aus dem versprühten Wasser ausgetretenen Gases umfasst die erfindungsgemäße Sprühvorrichtung 1 einen Katalysator, der in Form modularer Elemente 2 oberhalb des Verteilbereiches 10 angeordnet ist. Gemäß der in Fig. 1 dargestellten bevorzugten Ausführungsform sind die Elemente 2 anstelle eines zweiten Verteilbereichs im Bereichs des Zylindermantels angeordnet. Die abgebildete Ausführungsform wird folglich aus einer Sprühvorrichtung mit zwei Verteilbereichen durch Umbau erhalten, bei dem der obere Verteilbereich durch den Katalysator ersetzt wird.

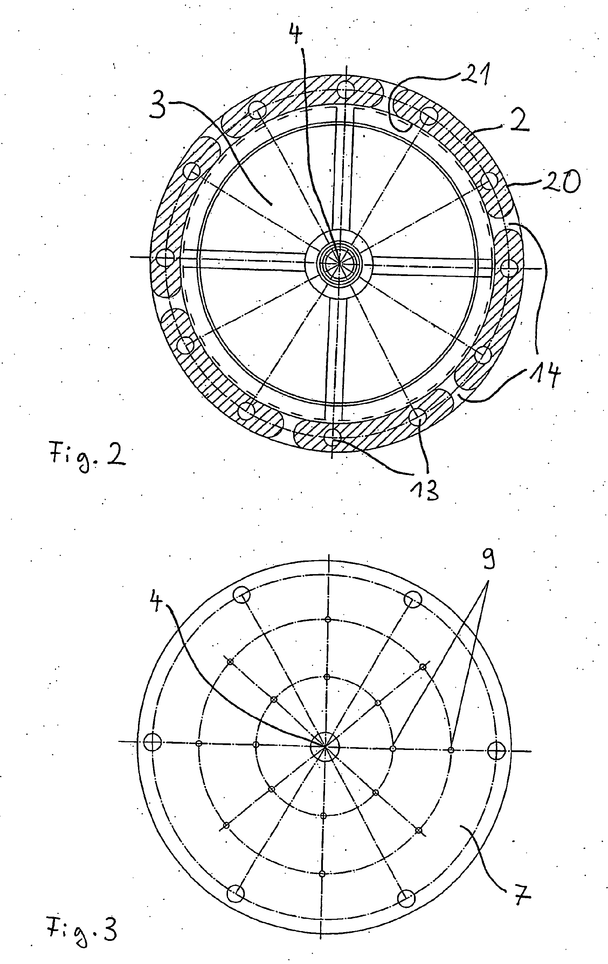

In Fig. 2 ist die Anordnung der modularen Elemente 2 in der Sprühvorrichtung näher dargestellt. Die Elemente 2 sind entsprechend der Krümmung des Zylinders ausgebildet und im Bereich des Zylindermantels angeordnet. Die Befestigung erfolgt mit jeweils zwei Schrauben 13 pro Element 2 an der Sprühvorrichtung 1. Jedes Element 2 weist eine nach außen gerichtete Seite 20 und eine nach innen gerichtete Seite 21 auf, wobei die Differenz der zur Außen- bzw. Innenseite gehöhrenden Zylinderradien die Dicke der Elemente in radialer Richtung festlegt.

Um die katalytisch aktive Oberfläche zur Umsetzung der Gase möglichst groß zu machen, befinden sich zwischen den Elementen 2 Zwischenräume 14, durch die umzusetzendes Gas strömen und zur Innenseite 21 der Elemente 2 gelangen können. Die modularen Elemente 2 umfassen Platin als Edelmetall, wodurch insbesondere die Umsetzung von Wasserstoff- und Sauerstoffgas zu Wasser katalysiert wird. Die bevorzugte Ausführungsform ist also besonders geeignet, um das im Speisewasser eines Kernkraftwerks vom Typ eines Siedewasserreaktors entstehende Photolysegas zu entfernen.

Beim Betrieb der erfindungsgemäßen Vorrichtung wird zu versprühendes Wasser durch ein zwischen Katalysator-Elementen 2 und Achse 4 angeordnetes Rohr 3 zum Verteilbereich 10 geleitet, wo es abhängig von seinem Druck und seiner Menge über ein kegeliges Abdeckblech 8 eine Kraft auf eine Bodenplatte 7 ausübt. Die Kraft ist in Fig. 1 in Richtung der Zylinderachse 4 nach unten gerichtet. Sowohl Abdeckblech 8 als auch Bodenplatte 7 sind gemäß Figuren 1 und 3 mit Mindestmengenbohrungen 12 bzw. 9 versehen, um bei besonders großen zu versprühenden Wassermengen eine Überlastung der Sprühvorrichtung zu verhindern.

Dadurch, dass die Bodenplatte 7 über eine Zugstange 11 mit einer oberhalb der Sprühvorrichtung angeordneten Arbeitsfeder (nicht abgebildet) federnd gelagert ist, wird sie durch den Druck des Wassers in Richtung der Zylinderachse 4 nach unten ausgelenkt. Die ebenfalls an der Bodenplatte 7 befestigte Sprühfeder 5 wird dadurch gedehnt und gibt abhängig vom Wasserdruck unterschiedlich weit geöffnete Federschlitze 6 frei. Das zu entgasende Wasser wird durch die Federschlitze 6 hindurch aus der Sprühvorrichtung 1 geleitet und bildet einen nicht dargestellten Sprühschirm aus feinsten Wassertröpfchen. Zum Sprühschirm wird ein ebenfalls nicht abgebildeter heißer Wasserdampf (Anzapfdampf) geleitet, der durch Wärmeaustausch mit den wesentlich kälteren Wasserströpfchen die darin enhaltenen Gase freisetzt.

Die auf diese Art und Weise aus den versprühten Wassertröpfchen oder durch andere Engasertechniken im Speisewasserbehälter freigesetzten Gase strömen aufgrund ihrer geringen Dichte nach oben und gelangen in den Bereich der modularen Elemente 2. Dadurch, dass durch das zwischen Zylinderachse 4 und Katalysatorelementen 2 angeordnete Rohr 3 verhältnismäßig kaltes Wasser hindurchgeleitet wird, bildet das Rohr 3 mit den angrenzenden Elementen 2 innerhalb der Sprühvorrichtung 1 eine lokale Unterkühlungszone. In dieser konzentrieren sich die zu entfernenden Gase auf, wodurch sie an den katalytisch aktiven Oberflächen der Elemente 2 rasch und vollständig aus dem Wärmekreislauf beseitigt werden.

Dieser für die Entfernung der Gase vorteilhafte Effekt der Ausbildung einer Unterkühlungszone wird noch dadurch verstärkt, dass die katalytisch aktiven Elemente 2 der Sprühvorrichtung 1 im Speisewasserbehälter unmittelbar unterhalb einer oberen Wand des Speisewasserbehälters (nicht abgebildet) angeordnet sind und sich damit auch innerhalb des Speisewasserbehälters in der kältesten Zone befinden.

## Patentansprüche

1. Vorrichtung zum Entgasen von Wasser in einem Speisewasserbehälter eines Wärmekraftwerks, welche ein vertikal ausgerichtetes Rohr (3) mit einem Mantel und einen im Mantel angeordneten Verteilbereich (10) aufweist, **gekennzeichnet durch** oberhalb des Verteilbereichs (10) und im Bereich des Rohrmantels angeordnete Katalysatorelemente (2) zur Umsetzung von im Wasser enthaltenen Gasen, wobei das zu entgasende Wasser über das Rohr (3) zum Verteilbereich (10) geführt wird und beim Austritt aus dem Verteilbereich einen Sprühschirm aus Wassertröpfchen bildet, und wobei die Katalysatorelemente (2) im Strömungsweg der im Sprühschirm freigesetzten Gase angeordnet sind.

2. Vorrichtung nach Anspruch 1,
**dadurch gekennzeichnet,**
**dass** der Katalysator ausgebildet ist, um Wasserstoff- und Sauerstoffgas zu Wasser umzusetzen.

3. Vorrichtung nach Anspruch 1 oder 2,
**dadurch gekennzeichnet,**
**dass** der Katalysator wenigstens ein Edelmetall umfasst.

4. Vorrichtung nach einem der Ansprüche 1 bis 3,
**dadurch gekennzeichnet,**
**dass** der Katalysator als Massivmaterial ausgebildet ist.

5. Vorrichtung nach einem der Ansprüche 1 bis 3,
**dadurch gekennzeichnet,**
**dass** der Katalysator als Trägerwerkstoff mit katalytisch aktiver Beschichtung ausgebildet ist.

6. Vorrichtung nach einem der Ansprüche 1 bis 5,
**dadurch gekennzeichnet,**
**dass** der Katalysator eine Blechstruktur aufweist.

7. Vorrichtung nach einem der Ansprüche 1 bis 6,
**dadurch gekennzeichnet,**
**dass** der Katalysator als Streckmetall ausgebildet ist.

8. Vorrichtung nach einem der Ansprüche 1 bis 6,
**dadurch gekennzeichnet,**
**dass** der Katalysator als Drahtnetz ausgebildet ist.

9. Vorrichtung nach einem der Ansprüche 1 bis 8,
**dadurch gekennzeichnet,**
**dass** der Katalysator als wenigstens ein modulares Element (2) ausgebildet ist.

10. Vorrichtung nach einem der Ansprüche 1 bis 9,
**dadurch gekennzeichnet,**
**dass** der Verteilbereich (10) Sprühöffnungen umfasst und der Katalysator in unmittelbarer Nähe des Verteilbereichs (10) angeordnet ist.

11. Vorrichtung nach Anspruch 10,
**dadurch gekennzeichnet,**
**dass** der Katalysator in einer Längsrichtung der Sprühvorrichtung (1) oberhalb des Verteilbereichs (10) angeordnet ist.

12. Vorrichtung nach Anspruch 10 oder 11,
**dadurch gekennzeichnet,**
**dass** der Katalysator an einer nach außen gerichteten Seite der Sprühvorrichtung (1) angeordnet ist.

13. Vorrichtung nach einem der Ansprüche 10 bis 12,
**dadurch gekennzeichnet,**
**dass** der Katalysator in einer Sprühvorrichtung (1) mit wenigstens zwei Verteil bereichen (10) anstelle eines Verteilbereichs angeordnet ist.

14. Vorrichtung nach einem der Ansprüche 10 bis 13,
**dadurch gekennzeichnet,**
**dass** sie eine Zylindersymmetrie besitzt.

15. Vorrichtung nach Anspruch 14,
**dadurch gekennzeichnet,**
**dass** der Katalysator im Bereich des Zylindermantels angeordnet ist.

16. Vorrichtung nach Anspruch 15,
**dadurch gekennzeichnet,**
**dass** in einer radialen Richtung zwischen einer Zylinderachse (4) und dem Katalysator ein sich in axialer Richtung erstreckendes Rohr (3) angeordnet ist, das ausgebildet ist, um dem Verteilbereich (10) Wasser zuzuführen.

17. Vorrichtung nach einem der Ansprüche 1 bis 16,
**dadurch gekennzeichnet,**
**dass** der Katalysator unmittelbar unterhalb einer oberen Wand eines Speisewasserbehälters im Speisewasserbehälter angeordnet ist.

18. Verfahren zum Entgasen von Wasser in einem Speisewasserbehälter eines Wärmekraftwerks mittels einer Vorrichtung, welche ein vertikal ausgerichtetes Rohr (3) mit einem Mantel und einen im Mantel angeordneten Verteilbereich (10) aufweist, **gekennzeichnet durch** oberhalb des Verteilbereichs (10) und im Bereich des Rohrmantels angeordnete Katalysatorelemente (2) zur Umsetzung von im Wasser enthaltenen Gasen, wobei das zu entgasende Wasser über das Rohr (3) zum Verteilbereich (10) geführt wird und beim Austritt aus dem Verteilbereich einen Sprühschirm aus Wassertröpfchen bildet, wobei zum Sprühschirm heißer Wasserdampf geleitet wird, der Rohrmantel aufgrund der Wassertemperatur eine Unterkühlungszone bildet, so dass sich die im Sprühschirm freigesetzten Gase ansammeln, und wobei die Katalysatorelemente (2) in der Unterkühlungszone angeordnet sind.

## Claims

1. Device for removing gas from water in a feedwater tank of a thermal power plant, which exhibits a vertically arranged tube (3) with a covering and a spray area (10) arranged in the covering, **characterized by** catalyst elements (2) arranged above the spray area (10) and in the area of the tube covering for converting the gases contained in the water, wherein the water from which the gas is to be removed is conveyed via the tube (3) to the spray area (10) and forms a spray screen of water droplets when leaving the spray area, and wherein the catalyst elements (2) are arranged in the flow path of the gases released in the spray screen.

2. Device according to claim 1, wherein the catalyst is adapted to convert hydrogen and oxygen gas to water.

3. Device according to claim 1 or 2, wherein the catalyst comprises at least one precious metal.

4. Device according to one of claims 1 to 3, wherein the catalyst is adapted as a bulk material.

5. Device according to one of claims 1 to 3, wherein the catalyst is adapted as a substrate with a catalytically active coating.

6. Device according to one of claims 1 to 5, wherein the catalyst has a sheet metal structure.

7. Device according to one of claims 1 to 6, wherein the catalyst is adapted as an expanding metal.

8. Device according to one of claims 1 to 6, wherein the catalyst is adapted as wire netting.

9. Device according to one of claims 1 to 8, wherein the catalyst is adapted as at least one modular element (2).

10. Device according to one of claims 1 to 9, wherein the spray area (10) comprises spray openings and the catalyst is arranged in direct proximity to the spray area (10).

11. Device according to claim 10, wherein the catalyst is arranged in a longitudinal direction of the spray device (1) above the spray area (10).

12. Device according to claim 10 or 11, wherein the catalyst is arranged on an outwardly directed side of the spraying device (1).

13. Device according to one of claims 10 to 12, wherein the catalyst is arranged in a spraying device (1) with at least two spray areas (10) instead of one spray area.

14. Device according to one of claims 10 to 13, wherein the device is cylinder-symmetrical.

15. Device according to claim 14, wherein the catalyst is arranged in the area of the cylinder covering.

16. Device according to claim 15, wherein a tube (3) extending in an axial direction is arranged in a radial direction between a cylinder axle (4) and the catalyst, said tube being adapted so as to convey water to the spray area (10).

17. Device according to one of claims 1 to 16, wherein the catalyst is arranged in the feedwater tank directly below the upper wall of the feedwater tank.

18. Method for removing gas from water in a feedwater tank of a thermal power plant by means of a device which exhibits a vertically arranged tube (3) with a covering and a spray area (10) arranged in the covering, **characterized by** catalyst elements (2) arranged above the spray area (10) and in the area of the tube covering for converting gases contained in the water, wherein the water from which the gas is to be removed is conveyed via the tube (3) to the spray area (10) and forms a spray screen of water droplets when leaving the spray area, wherein hot water steam is conveyed to the spray screen, the tube casing forming a supercooling zone as a result of the water temperature so that the gases released in the spray screen accumulate, and wherein the catalyst elements (2) are arranged in the supercooling zone.

## Revendications

1. Dispositif pour le dégazage de l'eau dans un réservoir d'eau d'alimentation d'une centrale électrique thermique, qui comprend un tube (3) vertical avec une enveloppe et une zone de distribution (10) disposée dans l'enveloppe, **caractérisé en ce que** sont prévus des éléments catalyseurs (2) disposés au-dessus de la zone de distribution (10) et au niveau de l'enveloppe du tube pour la transformation des gaz contenus dans l'eau, l'eau à dégazer étant amenée par le tube (3) dans la zone de distribution (10) et formant à sa sortie hors de la zone de distribution un éventail de pulvérisation de gouttelettes d'eau, et les éléments catalyseurs (2) se trouvant sur le trajet d'écoulement des gaz libérés dans l'éventail de pulvérisation.

2. Dispositif selon la revendication 1, **caractérisé en ce que** le catalyseur est conçu pour transformer l'hydrogène et l'oxygène gazeux en eau.

3. Dispositif selon la revendication 1 ou 2, **caractérisé en ce que** le catalyseur contient au moins un métal précieux.

4. Dispositif selon l'une des revendications 1 à 3, **caractérisé en ce que** le catalyseur est fait de métal massif.

5. Dispositif selon l'une des revendications 1 à 3, **caractérisé en ce que** le catalyseur est conçu comme un matériau porteur avec un revêtement actif catalytique.

6. Dispositif selon l'une des revendications 1 à 5, **caractérisé en ce que** le catalyseur possède une structure en tôle.

7. Dispositif selon l'une des revendications 1 à 6, **caractérisé en ce que** le catalyseur est formé de métal déployé.

8. Dispositif selon l'une des revendications 1 à 6, **caractérisé en ce que** le catalyseur est formé d'un filet de fils métalliques.

9. Dispositif selon l'une des revendications 1 à 8, **caractérisé en ce que** le catalyseur est formé d'au moins un élément modulaire (2).

10. Dispositif selon l'une des revendications 1 à 9, **caractérisé en ce que** la zone de distribution (10) comprend des ouvertures de pulvérisation et le catalyseur est disposé à proximité immédiate de la zone de distribution (10).

11. Dispositif selon la revendication 10, **caractérisé en ce que** le catalyseur est disposé dans un sens longitudinal du dispositif de pulvérisation (1) au-dessus de la zone de distribution (10).

12. Dispositif selon la revendication 10 ou 11, **caractérisé en ce que** le catalyseur est disposé sur un côté du dispositif de pulvérisation (1) orienté vers l'extérieur.

13. Dispositif selon l'une des revendications 10 à 12, **caractérisé en ce que** le catalyseur est disposé dans un dispositif de pulvérisation (1) avec au moins deux zones de distribution (10) au lieu d'une zone de distribution.

14. Dispositif selon l'une des revendications 10 à 13, **caractérisé en ce qu'**il possède une symétrie cylindrique.

15. Dispositif selon la revendication 14, **caractérisé en ce que** le catalyseur est disposé au niveau de l'enveloppe du cylindre.

16. Dispositif selon la revendication 15, **caractérisé en ce qu'**il est prévu disposé dans le sens radial entre un axe du cylindre (4) et le catalyseur un tube (3) s'étendant dans le sens axial, qui est conçu pour amener de l'eau à la zone de distribution (10).

17. Dispositif selon l'une des revendications 1 à 16, **caractérisé en ce que** le catalyseur est disposé immédiatement en dessous d'une paroi supérieure d'un réservoir d'eau d'alimentation à l'intérieur du réservoir d'eau d'alimentation.

18. Procédé de dégazage de l'eau dans un réservoir d'eau d'alimentation d'une centrale électrique thermique, au moyen d'un dispositif comprenant un tube (3) vertical avec une enveloppe et une zone de distribution (10) disposée dans l'enveloppe, **caractérisé en ce que** sont prévus des éléments catalyseurs (2) disposés au-dessus de la zone de distribution (10) et au niveau de l'enveloppe du tube pour la transformation des gaz contenus dans l'eau, dans lequel l'eau à dégazer est amenée par le tube (3) dans la zone de distribution (10) et forme à sa sortie hors de la zone de distribution un éventail de pulvérisation de gouttelettes d'eau, de la vapeur d'eau chaude est amenée vers l'éventail de pulvérisation, l'enveloppe du tube forme, en raison de la température de l'eau, une zone de sur-refroidissement, ce qui provoque l'accumulation des gaz libérés dans l'éventail de pulvérisation, et les éléments catalyseurs (2) sont disposés dans la zone de sur-refroidissement.
